# Europäisches Patentamt

# European Patent Office

# Office européen des brevets

(11) Veröffentlichungsnummer: **0 233 601**
**B1**

(12) **EUROPÄISCHE PATENTSCHRIFT**

(45) Veröffentlichungstag der Patentschrift:
25.04.90

(51) Int. Cl.⁴: **C09C 1/36**

(21) Anmeldenummer: 87102002.0

(22) Anmeldetag: 12.02.87

(54) Verwendung von Rutilmischphasenpigmenten zum Einfärben von Kunstoffen.

(30) Priorität: 13.02.86 DE 3604317

(43) Veröffentlichungstag der Anmeldung:
26.08.87 Patentblatt 87/35

(45) Bekanntmachung des Hinweises auf die Patenterteilung:
25.04.90 Patentblatt 90/17

(84) Benannte Vertragsstaaten:
BE DE FR GB IT NL

(56) Entgegenhaltungen:
FR-A- 2 340 972
GB-A- 877 734
SU-A- 1 198 085

CHEMICAL ABSTRACTS, Band 92, Nr. 14, April 1980,
Seite 77, Zusammenfassung Nr. 112362a, Columbus,
Ohio, US; & SU-A-709 651 (Y.A. GRUZDEV et
al.) 15.01.1980

(73) Patentinhaber: BASF Lacke + Farben
Aktiengesellschaft, Max-Winkelmann-Strasse 80,
D-4400 Münster(DE)

(72) Erfinder: Knittel, Helmut, Dr., Heilbronner Strasse 66,
D-7140 Ludwigsburg(DE)
Erfinder: Bauer, Roland, Halbenmorgen 32,
D-5060 Bergisch-Gladbach 1(DE)
Erfinder: Liedek, Egon, Dr., Holunderweg 16,
D-7300 Esslingen(DE)
Erfinder: Etzrodt, Guenter, Dr., Rebmannstrasse 6,
D-7000 Stuttgart 1(DE)

(74) Vertreter: Kinzel, Klaus, Dr. et al, BASF
Aktiengesellschaft Patentabteilung
Carl-Bosch-Strasse 38, D-6700 Ludwigshafen(DE)

EP 0 233 601 B1

**Beschreibung**

Von den Rutil-Mischphasenpigmenten haben bislang die Nickel- und Chrom-Rutil-Mischphasenpigmente größere technische Bedeutung erlangt. Beim Einbau von Chromoxid als farbgebende Oxide in das Rutilgitter werden zum Wertigkeitsausgleich höherwertige Metalloxide, insbesondere von Antimon ($Sb_2O_5$) eingebaut (vgl. Ullmanns Encyklopädie der technischen Chemie, 4. Auflage, Band 18, Seiten 606–610).

Diese Rutilmischphasenpigmente, die neben $TiO_2$ Chrom-(III)-oxid und Antimon-(V)oxid enthalten, lassen sich durch Variation der Einzelkomponenten im Dreistoffsystem Ti-Cr-Sb in allen Farbschattierungen vom hellen goldgelb bis zum dunklen braungelb herstellen. Sie zeichnen sich durch ausgezeichnete Beständigkeit gegen Säuren, Laugen, UV-Strahlung und Witterungseinflüsse aus. Die toxikologische Unbedenklichkeit ist ein weiterer Grund dafür, daß diese Pigmentgruppe immer mehr in der Kunststoff- und Lackindustrie verwendet und teilweise als Ersatz für die als toxisch eingestuften gelben Cadium- oder Bleifarben eingesetzt wird.

Diese Rutilmischphasenpigmente haben aber den Nachteil, daß sie bei Temperaturen oberhalb von 240°C, wie sie teilweise bei der Verarbeitung von Kunststoffen auftreten, mit zunehmenden Temperaturen sich immer stärker verfärben und bei Temperaturen ab 280°C bis 300°C zu Fehlfarben (grau bzw. graugrün) führen, so daß sie in einem großen Anwendungsbereich nicht eingesetzt werden können.

In der SU-A 1 198 085 werden Gemische zur Herstellung von gelbem Pigment auf der Basis von Titanoxid, Antimontrioxid und einer chromhaltigen Verbindung, die zwecks Erhöhung der Deckfähigkeit und der Farbstärke ein nicht chromophores Chlorid der I- oder II-Gruppe des Periodischen Systems enthalten, beschrieben.

Der vorliegenden Erfindung lag die Aufgabe zugrunde, den Nachteil der Verfärbung von Rutilmischphasenpigmenten bei der Einfärbung von Kunststoffen, die oberhalb von 240°C verarbeitet werden, zu vermeiden. Es wurde gefunden, daß diese Aufgabe durch Verwendung von Rutilmischphasenpigmenten des Dreistoffsystems Titan, Antimon und Chrom, die zusätzlich 0,1 bis 2 Gew.-% Magnesium in Form von Magnesiumoxid und/oder Magnesiumsilikat enthalten, gelöst werden kann. Die erfindungsgemäßen Rutilmischphasenpigmente enthalten neben Magnesium 75 bis 85 Gew.-% $TiO_2$, 4 bis 9 Gew.-% $Cr_2O_3$ und 10 bis 16 Gew.-% $Sb_2O_5$.

Die erfindungsgemäßen Pigmente werden in üblicher Weise nach dem Trocken- oder Naßmischverfahren hergestellt. Nach dem Trockenverfahren werden die oxidischen Einzelkomponenten innig miteinander vermischt und die Mischungen bei Temperaturen von 900 bis 1200°C miteinander umgesetzt. Anstelle der oxidischen Verbindungen können auch solche Verbindungen eingesetzt werden, die bei den genannten Brenntemperaturen, gegebenenfalls in oxidierender Atmosphäre in die entsprechenden Oxide umgesetzt werden, z.B. Carbonate und Nitrate. Als Magnesiumkomponente kann man Magnesiumoxid einsetzen, verwendet jedoch vorzugsweise Magnesiumcarbonat, durch das die Pigmenteigenschaften der Endprodukte besonders günstig beeinflußt werden. Das Magnesiumcarbonat hat vorteilhaft eine spezifische Oberfläche, gemessen nach BET von 25 bis 50 $m^2$/g.

Als Antimonkomponente setzt man zweckmäßig Antimontrioxid ein, dessen spezifische Oberfläche, gemessen nach BET, zweckmäßig von 1 bis 5 $m^2$/g beträgt, das bei dem anschließenden Brennen unter oxidierender Atmosphäre in fünfwertiges Antimonoxid überführt wird. Das eingesetzte Chromtrioxid hat zweckmäßig eine Oberfläche, gemessen nach BET, von 3 bis 6 $m^2$/g.

Als Titanoxidkomponente setzt man vorteilhaft reaktionsfreudigeren Anatas ein.

Anstelle des Trockenmischverfahrens kann auch das Naßmischverfahren eingesetzt werden, bei dem die oxidischen Bestandteile zwecks Erzielung einer besonders guten Vermischung in wäßriger Suspension vermischt werden. Setzt man als Ausgangsstoff schwefelsaure Titanoxidhydratsuspensionen ein, so müssen säureunlösliche Magnesiumverbindungen eingesetzt werden. Vorteilhaft ist das in diesem Medium unlösliche Magnesiumsilikat, dessen spezifische Oberfläche, gemessen nach BET, zweckmäßig von 5 bis 15 $m^2$/g beträgt.

Anschließend an das Brennen werden die erhaltenen Produkte in üblicher Weise über Trockenmahl- und/oder Naßmahlverfahren aufgearbeitet.

Die Prüfung der Temperaturbeständigkeit erfolgt in Kunststoff, z.B. bei 1 bis 2 %iger Pigmentierung in Polyamid oder ABS. Man fertigt eingefärbte Kunststoffplättchen an, die jeweils 5 Minuten lang im Laborofen bei 240°C, 260°C, 280°C, 300°C und 320°C erhitzt werden. Die so behandelten Kunststoffplättchen werden nun visuell gegen die 240°C Probe verglichen bzw. farbmetrisch vermessen. Bei einem temperaturstabilen Pigment darf kein sichtbarer Farbunterschied zwischen der 240°C Probe und der 320°C Probe auftreten.

Die in den Beispielen genannten Teile sind Gewichtsteile.

**Beispiel 1**

79 Teile Anatas werden mit 14 Teilen Antimontrioxid, 6 Teilen feinteiligem Chromtrioxid und 2 Teilen Magnesiumcarbonat intensiv vermischt.

Anschließend wird die Mischung bei ca. 1070°C in elektrisch oder gasgeheizten Kammeröfen unter oxidierender Atmosphäre getempert. Man erhält ein relativ weiches Glühprodukt, das anschließend zu

2

einer wäßrigen Pigmentsuspension vermahlen wird. Im Anschluß daran wird die Pigmentsuspension entwässert, gewaschen, getrocknet und trockenvermahlen.

Man erhält ca. 100 Teile eines dunkelgelben, farbstarken und temperaturstabilen Rutilmischphasenpigments mit einem gefälligen, reinen Farbton.

Das Produkt weist folgende Zusammensetzung auf:

$TiO_2$ ca. 79 Gew.-%
$Cr_2O_3$ ca. 6 Gew.-%
$Sb_2O_5$ ca. 14 Gew.-%
MgO ca. 1 Gew.-%.

Man erhält die gleichen Ergebnisse, wenn man anstelle von Anatals 102 Teile Titanoxidhydratat mit einem $TiO_2$-Gehalt von 78 Gew.-% einsetzt.
Prüfergebnis:

Die Prüfung des Pigmentes erfolgte in Polyamid, 2 % pigmentiert, in einem Temperaturabstand von 20°C, wobei die Temperatur der Masse jeweils für 5 Minuten gehalten wurde. Die farbmetrische Auswertung nach CIELAB erfolgte an den erkalteten Spritzgußplättchen.

| jeweils 5 min. bei | 240°C | 260°C | 280°C | 300°C | 320°C |
|---|---|---|---|---|---|
| ohne Mg | | | | | |
| HGD | 74,6 ΔH | −0,1 | 1,1 | 2,8 | 5,0 |
| C | 59,7 ΔC | −0,3 | −1,7 | −3,9 | −7,5 |
| L | 69,9 ΔL | 0,3 | −0,5 | −1,8 | −3,7 |
| | ΔE | 0,5 | 2,1 | 5,1 | 9,8 |
| mit Mg | | | | | |
| HGD | 75,1 ΔH | −0,3 | −0,5 | −0,7 | −0,8 |
| C | 59,8 ΔC | 0,1 | 0,7 | 0,8 | 1,3 |
| L | 69,4 ΔL | 0,3 | 0,5 | 0,7 | 0,7 |
| | ΔE | 0,4 | 1,0 | 1,3 | 1,7 |

Beispiel 2

82 Teile Anatas werden mit 12 Teilen Antimontrioxid, 5 Teilen feinteiligem Chromtrioxid und 1,8 Teile Magnesiumcarbonat intensiv trocken vermischt. Anschließend wird die Mischung in einem Drehrohrofen, in dem zur Aufrechterhaltung der oxidierenden Atmosphäre $HNO_3$ im Gleichstrom eingedüst wird bei ca. 1050°C bis 40 Minuten lang gebrannt. Man erhält ein rieselfähiges, weiches Glühprodukt, das anschließend wie in Beispiel 1 aufgearbeitet wird.

Man erhält ca. 100 Teile eines hellgelben, farbstarken und temperaturstabilen Rutilmischphasenpigmentes mit einem ansprechenden, reinen Farbton.

Das Produkt weist folgende Zusammensetzung auf:

$TiO_2$ ca. 82,0 Gew.-%
$Cr_2O_3$ ca. 5,1 Gew.-%
$Sb_2O_5$ ca. 12,0 Gew.-%
MgO ca. 0,9 Gew.-%.

Man erhält die gleichen Ergebnisse, wenn anstelle von Anatas 105 Teile Titanoxidhydrat mit einem $TiO_2$-Gehalt von 78 Gew.-% eingesetzt wird.

Beispiel 3

In einem Behälter, der mit einem intensiv arbeitenden Rührwerk ausgerüstet ist, werden 400 Liter Wasser und 852 kg Titanoxidhydratsuspension mit einem Anteil von ca. 27 Gew.-% $TiO_2$ und einem pH-Wert von 1,0 bis 1,3 (schwefelsauer) vorgelegt. Anschließend gibt man 40 kg Antimontrioxid, 19 kg Chromtrioxid und 10 kg Magnesiumsilikat (Microtalkum) zu der vorgelegten Titanoxidhydratsuspension und mischt intensiv bis zur Homogenisierung der Rohstoffkomponenten. Anschließend wird die Rohstoffsuspension entwässert und getrocknet. Die getrocknete Rohstoffmischung wird nun wie in Beispiel 2 getempert und aufgearbeitet.

Man erhält ca. 3OO kg eines dunkelgelben, farbstarken und temperaturstabilen Rutilmischphasenpigmentes mit einem gefälligen, reinen Farbton.

Das Produkt weist folgende Zusammensetzung auf:

$TiO_2$ ca. 78 Gew.-%
$Cr_2O_3$ ca. 7 Gew.-%
$Sb_2O_5$ ca. 13,7 Gew.-%
MgO ca. 1,3 Gew.-%

**Patentanspruch**

Verwendung von Rutilmischphasenpigmenten des Dreistoffsystems Titan, Antimon und Chrom, die 0,1 bis 2 Gew.-% Magnesium in Form von Magnesiumoxid und/oder Magnesiumsilikat enthalten zum Einfärben von Kunststoffen, die oberhalb von 240°C verarbeitet werden.

**Claim**

The use of a rutile mixed phase pigment of the ternary system titanium, antimony and chromium, which contains from 0.1 to 2% by weight of magnesium in the form of magnesium oxide and/or magnesium silicate for colouring plastics which are processed at above 240°C.

**Revendication**

Utilisation de pigments de rutile à phase mixte du système à trois composants titane, antimoine et chrome, qui contiennent de 0,1 à 2% en poids de magnésium sous forme d'oxyde de magnésium et/ou de silicate de magnésium, pour colorer des matières plastiques qui sont mises en œuvre à plus de 240°C.